# EUROPEAN PATENT SPECIFICATION

(11) **EP 2 856 865 B1**
(45) Date of publication and mention of the grant of the patent: **25.10.2017**
(21) Application number: 13797362.4
(22) Date of filing: 29.05.2013
(51) Int. Cl.: A01K 1/01, B29C 53/36, B31D 1/00, B31D 1/04, E01H 1/12, B65D 71/06

(54) **FOLDING ANIMAL EXCREMENT DISPOSAL SHEET**
FALTBARE TIEREXKREMENTENTSORGUNGSFOLIE
FEUILLE À EXCRÉMENTS ANIMAUX PLIABLE

(30) Priority: 31.05.2012 JP 2012125380
(43) Date of publication of application: 08.04.2015
(73) Proprietor: Unicharm Corporation, Ehime 799-0111 (JP)
(72) Inventor: TAKAHASHI, Yumei, Kanonji-shi Kagawa 769-1602 (JP); SASANO, Yasuhiro, Kanonji-shi Kagawa 769-1602 (JP); MATSUO, Takayuki, Kanonji-shi Kagawa 769-1602 (JP)
(74) Representative: Peter, Julian
(86) International application number: PCT/JP2013/064955
(87) International publication number: WO 2013/180189

(56) References cited:
- FR-A1- 2 599 585
- JP-A- 2006 238 745
- JP-A- 2008 206 434
- JP-A- 2008 206 434
- JP-A- 2012 075 333
- US-A- 4 934 316
- US-A1- 2006 200 105

## Description

### TECHNICAL FIELD

The present invention relates to a folded animal excretion disposal sheet for disposing of excretion of a pet such as a dog or a cat. More specifically, the present invention relates to a sheet product produced by folding a fragrant folded animal excretion disposal sheet to which a fragrance ingredient has been applied, the folded animal excretion disposal sheet being configured to reduce dissipation of the fragrance ingredient before use.

### BACKGROUND ART

An animal excretion disposal sheet for disposing of excretion of a pet such as a dog or a cat includes, as basic constituents: a liquid permeable top sheet; a liquid impermeable back sheet; and an absorbent body that is disposed between these sheets. In a case of keeping a pet indoors, the pet needs to be trained to excrete in a pet litter box provided with this type of animal excretion disposal sheet.

Pets such as dogs and cats have the habit of excreting at a place that has an odor. As an animal excretion disposal sheet that makes use of such a habit for litter training, Patent Document 1 proposes a fragrant animal excretion disposal sheet in which a fragrance ingredient is applied uniformly to an entire top sheet (refer to Patent Document 1). Also document US-A1-2006/0200105 discloses a pet waste absorption sheet and a process for manufacturing the same. Patent Document 1: Japanese Unexamined Patent Application Publication No. 2008-206434

### DISCLOSURE OF THE INVENTION

### Problems to be Solved by the Invention

The smell of the fragrance ingredient should be perceived as a favorable scent by consumers using the animal excretion disposal sheet when a product is initially used, so as to contribute to improvement of the product image of the animal excretion disposal sheet. However, in a conventional fragrant animal excretion disposal sheet, no particular consideration has been made for prevention of dissipation of the actually applied fragrance before use. As a result, most of the fragrance ingredient is dissipated before a consumer starts using the product and the consumer cannot perceive the scent sufficiently, with the result that image improvement of the animal excretion disposal sheet by means of the scent is hindered.

Given this, the present invention is aimed at providing an animal excretion disposal sheet that can make the scent sufficiently perceived by the consumer upon starting to use the product, to thereby improve the product image by means of the scent.

### Means for Solving the Problems

The present invention pertains to a folded animal excretion disposal sheet, as defined in claim 1, formed by folding an animal excretion disposal sheet having a rectangular shape in a plan view with a first pair of lateral edges and a second pair of lateral edges. The animal excretion disposal sheet includes an outer peripheral joining portion in which a liquid permeable top sheet and a liquid impermeable back sheet are joined, and a central absorbent body portion in which an absorbent body is disposed between the top sheet and the back sheet. A fragrance ingredient is applied to the top sheet and/or the absorbent body. The folded animal excretion disposal sheet is folded along a folding line parallel to the first pair of lateral edges, such that the top sheet is not exposed to an outer surface. A plurality of the outer peripheral joining portions, composing the second pair of lateral edges after folding, are temporarily joined to each other to thereby form a pair of temporary joining portions. In the outer peripheral joining portion in the temporary joining portion, the top sheet and the back sheet are joined by a hotmelt adhesive.

It is preferable that the folded animal excretion disposal sheet is folded in three along two folding lines at equal distances from the first pair of lateral edges.

It is preferable that the top sheet is a nonwoven fabric and the back sheet is a resin film; and the temporary joining portion is formed by a surface of the resin film penetrating into fibers composing the nonwoven fabric.

It is preferable that an outermost edge among the first pair of lateral edges and positioned on the outer face side, is shifted to a position which does not overlap, in a plan view with a side edge of the folded animal excretion disposal sheet on the outermost edge side. The fragrance ingredient is applied to an area on the top sheet in which the top sheet portions face each other.

The present invention also pertains to a package body, as defined in claim 6, in which a plurality of folded animal excretion disposal sheets according to any one of described above are stacked and contained in a bag. The folded animal excretion disposal sheets are contained in a state of being pressed against each other inside the bag. This package body of the animal excretion disposal sheet includes an animal excretion disposal sheet according to any one of described above; and a bag containing the animal excretion disposal sheet therein, in which the animal excretion disposal sheet is folded and contained in the bag such that the back sheet forms an outer surface.

It is preferable that the bag is a non-hermetic container having a hole portion that can let through the fragrance ingredient.

It is preferable that the fragrance ingredient information is noted on the bag.

The present invention also pertains to a method for manufacturing the folded animal excretion disposal sheet according to any one of described in the above and as defined in claim 9, including:
a continuous body forming step of forming an absorbent article continuous body in which a plurality of absorbent bodies are disposed at predetermined intervals in a longitudinal direction, between a belt-like top sheet and a belt-like back surface layer; a folding-back step of folding the pair of lateral edges of the absorbent article continuous body along folding lines that are parallel to the longitudinal direction of the absorbent article continuous body; and a cutting step of cutting the absorbent article continuous body after the folding-back step in a width direction at predetermined intervals in the longitudinal direction; in which the pair of temporary joining portions is formed in the cutting step.

### Effects of the Invention

The folded animal excretion disposal sheet of the present invention suppresses dissipation of the fragrance ingredient before start of use and makes the scent sufficiently perceived by the consumer upon start of use by forming temporary joining portions on lateral edges, so as to enable a substantial improvement in the product image by means of scent of the animal excretion disposal sheet.

### BRIEF DESCRIPTION OF THE DRAWINGS

FIG. 1 is a perspective view of an animal excretion disposal sheet, in a state before folding of a folded animal excretion disposal sheet of the present invention, viewed from a top sheet side;
FIG. 2 is a cross-sectional view taken along the line A-A of FIG. 1;
FIG. 3 is a plan view of the folded animal excretion disposal sheet of the present invention;
FIG. 4 is a cross-sectional view taken along the line B-B of FIG. 3;
FIG. 5 is a perspective view of an animal excretion disposal sheet, in a state before folding of a folded animal excretion disposal sheet, which is provided with information evocative of scent, viewed from a top sheet side;
FIG. 6 is a plan view of the folded animal excretion disposal sheet of the present invention provided with information evocative of scent;
FIG. 7 is a diagram schematically explaining a mode of a continuous body forming step, which is a step in a method for manufacturing the folded animal excretion disposal sheet according to the present invention;
FIG. 8 is a diagram schematically explaining a mode of a folding-back step, which is a step in the method for manufacturing the folded animal excretion disposal sheet according to the present invention;
FIG. 9 is a diagram schematically explaining a mode of a cutting step, which is a step in the method for manufacturing the folded animal excretion disposal sheet according to the present invention; and
FIG. 10 is a perspective view of a package body of the animal excretion disposal sheet of the present invention.

### EXPLANATION OF REFERENCE NUMERALS

1 Folded animal excretion disposal sheet
10 Animal excretion disposal sheet
11 First pair of lateral edges
12 Second pair of lateral edges
13 Outer peripheral joining portion
14 Central absorbent body portion
20 Top sheet
30 Back sheet
40 Absorbent Body
50 Temporary joining portion
60 Evocative information
61 Fragrance ingredient information
70 Bag
80 Package body
90 Cutting device
100 Absorbent article continuous body

### PREFERRED MODE FOR CARRYING OUT THE INVENTION

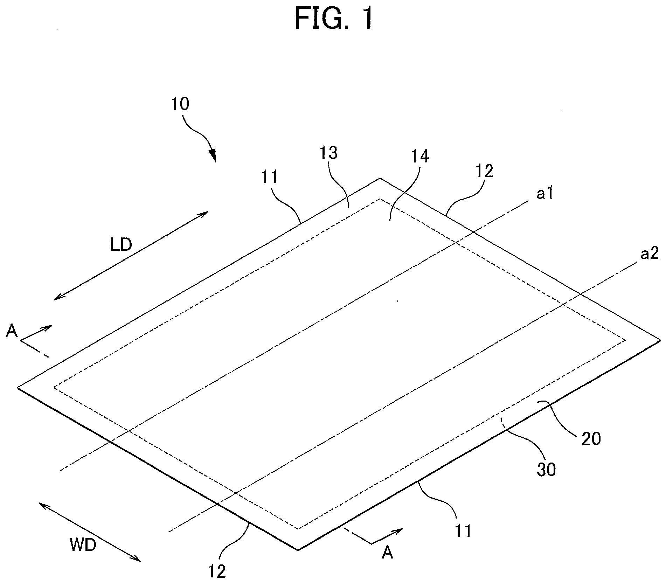

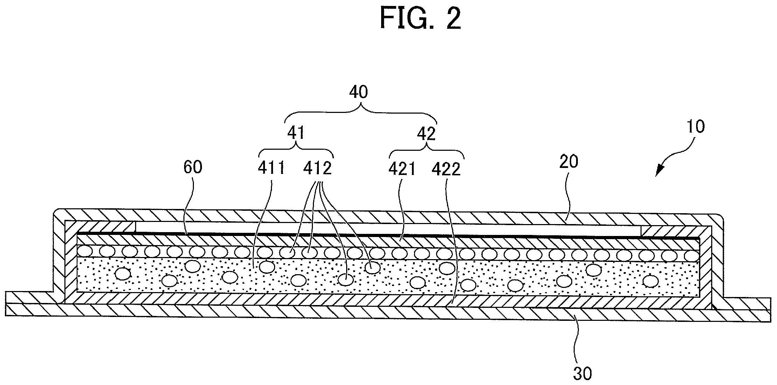

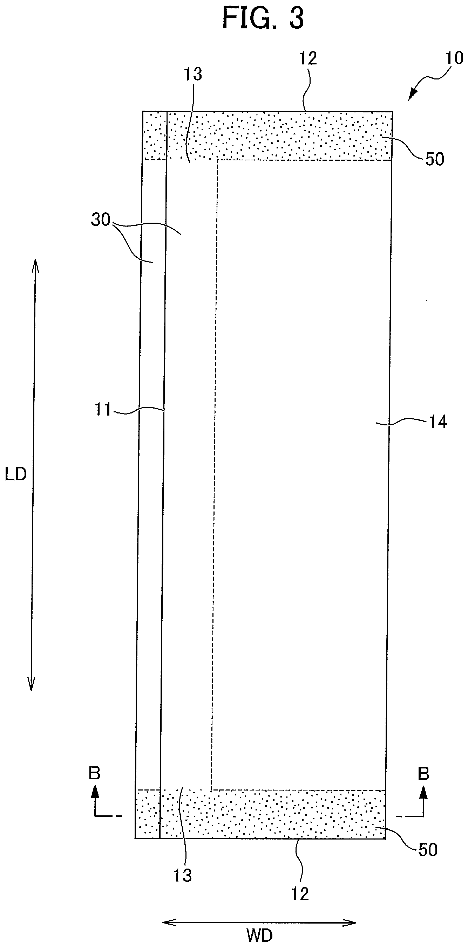

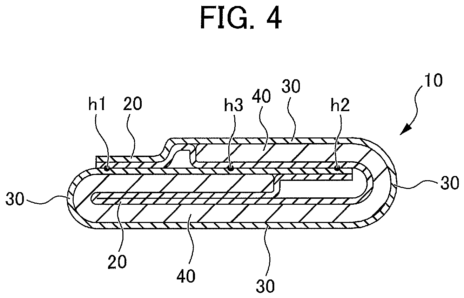

A preferable embodiment of the folded animal excretion disposal sheet is described with reference to FIGS. 1 to 4. FIG. 1 is a perspective view of an animal excretion disposal sheet 10 constituting a folded animal excretion disposal sheet 1, viewed from a side of a top sheet 20 which is a face on which a pet or the like excretes stool and urine during use thereof. FIG. 2 is a cross-sectional view taken along the line A-A of FIG. 1. FIG. 3 is a plan view of the folded animal excretion disposal sheet 1 formed by folding the animal excretion disposal sheet 10 of FIG. 1. FIG. 4 is a cross-sectional view taken along the line B-B of FIG. 3.

In the folded animal excretion disposal sheet 1 illustrated in FIG. 3, the animal excretion disposal sheet 10 having a rectangular shape in a plan view illustrated in FIG. 1 is folded in three along folding lines a1, a2 which are parallel to a first pair of lateral edges 11 that form an arbitrary pair of lateral edges thereof. In addition, temporary joining portions 50 that can suppress dissipation of a fragrance ingredient from the animal excretion disposal sheet 1 are provided at ends of the folded animal excretion disposal sheet 1 on a side of a second pair of lateral edges 12 that form another arbitrary pair of lateral edges.

The animal excretion disposal sheet 10 is first described, followed by details of the animal excretion disposal sheet 1, focusing on a mode of folding the sheet and a configuration of the temporary joining portion 50.

As illustrated in FIG. 1, the animal excretion disposal sheet 10 is a liquid absorbent sheet formed in a substantially planar shape as a whole, with a rectangular shape in a plan view. The size of the animal excretion disposal sheet 10 can be selected appropriately according to the size of a target animal and a cage, and is not particularly limited; however, the length in a longitudinal direction (LD) is preferably at least 30 cm and no greater than 120 cm and the length in a width direction (WD) is preferably at least 20 cm and no greater than 100 cm. The area in a plan view is preferably at least 600 cm² and no greater than 12000 cm².

As shown in FIGS. 1 and 2, the animal excretion disposal sheet 10 includes a liquid permeable top sheet 20, a liquid impermeable back sheet 30, and an absorbent body 40 disposed between the top sheet 20 and the back surface sheet 30 that absorbs and retains liquid such as excretion. In addition, in an outer peripheral edge of the animal excretion disposal sheet 10, an outer peripheral joining portion 13 is formed, in which the top sheet 20 and the back sheet 30 are joined. Meanwhile, in a part other than the outer peripheral joining portion 13 of the animal excretion disposal sheet 10, a central absorbent body portion 14 is formed, in which the absorbent body 40 is disposed between the top sheet 20 and the back sheet 30.

The top sheet 20 is disposed to cover the absorbent body 40 and allows liquid such as excretion to pass through to the absorbent body 40. As a material for the top sheet 20, various liquid permeable sheet materials such as a liquid permeable nonwoven fabric are used. More specifically, a thermal bonded nonwoven fabric made of hydrophilic polypropylene fiber, a point bonded nonwoven fabric, a through-air nonwoven fabric, a spun lace nonwoven fabric, a spun bonded nonwoven fabric or the like can be used. By using these materials as the top sheet 20, the excretion and the like can be quickly let through to the absorbent body 40.

In order to facilitate formation of the temporary joining portion 50 during the cutting of the sheet material in the manufacturing process of the animal excretion disposal sheet 10, among the various nonwoven fabrics listed above, a porous through-air nonwoven fabric, a through-air nonwoven fabric, or other bonded nonwoven fabrics (point bonded, SMS, spun bonded) can be particularly preferably used as the top sheet 20. The bonded nonwoven fabrics have high fiber density. This allows a resin film constituting the back sheet 30 to easily penetrate into fibers of the top sheet 20 upon pressure-bonding with respect to the back sheet 30 during manufacture, and formation of the temporary joining portion 50 is easily facilitated.

The thickness of the top sheet 20 is preferably at least 0.1 mm and no greater than 1.7 mm. The thickness of the top sheet 20 being less than 0.1 mm impairs the property of masking urine and the like absorbed by the absorbent body 40 and provides an inferior appearance during use, and is therefore not preferable. On the other hand, the thickness of the top sheet 20 being greater than 1.7 mm lowers liquid permeability and is therefore not preferable.

The basis weight of the top sheet 20 is preferably at least 8 g/m², and more preferably at least 23 /m². By making the basis weight of the top sheet 20 at least 8 g/m², sufficient water absorbent performance can be provided to the folded animal excretion disposal sheet 10. In addition, by making the basis weight of the top sheet 20 at least 23 g/m², the property of masking excretion absorbed into the absorbent body 40 during use can be made more preferable.

The back sheet 30 is disposed on an opposite side to the top sheet 20 across the absorbent layer 40, and constitutes a leak-proof layer in the folded animal excretion disposal sheet 10. As a material for the back sheet 30, various film materials which are substantially liquid impermeable are used. More specifically, a polyethylene air impermeable film and conventionally known resin films such as polypropylene, polyethylene terephthalate and the like can be used as the back sheet 30.

Among the resin films listed above, a polyethylene resin film can be used particularly preferably as the back sheet 30 in order to facilitate formation of the temporary joining portion 50. Since the polyethylene resin film has a low melting point, a resin film constituting the back sheet 30 can easily penetrate into fibers of the top sheet 20 upon pressure-bonding with respect to the top sheet 20 during manufacture, and formation of the temporary joining portion 50 is easily facilitated.

The absorbent body 40 is composed of an absorbent core 41 and a core wrapping sheet 42 that covers the absorbent core 41 entirely. The thickness of the absorbent body 40 is preferably at least 0.4 mm and no greater than 2.4 mm. The absorbent body 40 with a thickness less than 0.4 mm has an insufficient absorption property. On the other hand, the absorbent body 40 with a thickness greater than 2.4 mm is bulky and requires more space for storage, and is therefore not preferable.

The absorbent core 41 is configured to include a hydrophilic fiber 411 and/or a water absorbent resin 412. It is preferable that most of the water absorbent resin 412 is spread so as to be dispersed substantially uniformly in a layer formed of the hydrophilic fiber 411. Furthermore, it is more preferable that another portion of the water absorbent resin 412 is spread substantially uniformly at an interface between the layer formed of the hydrophilic fiber 411 and a top face side core wrapping sheet 421. By applying a portion of the water absorbent resin 412 to the interface, dispersion of excreted urine on the top sheet 20 can be suppressed properly and the number of times the folded animal excretion disposal sheet 10 is reused can be increased.

As the hydrophilic fiber 411, conventionally known hydrophilic materials are used. More specifically, a cellulosic fiber such as fluff pulp or other pulp, regenerated pulp or wood powder can be used. It is preferable that these hydrophilic materials have a water retention capacity of no greater than 4 times of their own weight. As used herein, "water retention capacity" indicates the remaining amount of absorbed water after immersing 5g of a material used as the hydrophilic fiber 411 in water for 10 minutes and then performing centrifugal dehydration thereof at 150G for 90 seconds, and is evaluated by the ratio of the remaining amount of absorbed water to the material's own weight. By setting the water retention capacity of the hydrophilic fiber 411 within the above described range, a preferable absorption performance can be provided to the absorbent body 40.

As the water absorbent resin 412, a polymeric absorbent body is used. More specifically, a resin that is generally highly absorbent such as polyacrylic acid polymer, starch-acrylic acid polymer or the like can be used. Here, absorbing speed of the water absorbent resin 412 is preferably high, more specifically preferably no greater than 20 seconds as measured by the vortex method. By setting the absorbing speed of the water absorbent resin 412 within the above described range, a preferable absorption performance can be provided to the absorbent body 40. It should be noted that the value of the vortex method is obtained by measurement by the following steps.
1) setting a 0.9% sodium chloride solution (first grade reagent) to 25 degrees C ± 1 degrees C;
2) putting a rotor and 50 g of the solution of 1) in a 100 ml beaker and agitating at 600 rpm;
3) adding 2g of water absorbent resin to be measured and measuring the time until liquid surface movement due to imbibition stops, as seconds vortex.

The core wrapping sheet 42 is composed of the top face side core wrapping sheet 421 and a back face side core wrapping sheet 422. The back face side core wrapping sheet 422 has lateral edges that rise up so as to wrap the entire absorbent body 40. In addition, a front end portion of the absorbent body is arranged to overlap an end portion of the top face side core wrapping sheet 421.

It should be noted that the core wrapping sheet 42 can be in any configuration that allows wrapping of the entire absorbent core 41 and is not limited to the above described configuration. For example, the core wrapping sheet can be composed of a single sheet of water absorbent paper. In the present specification, a part of the core wrapping sheet that is disposed on the top sheet 20 side is referred to as the top face side core wrapping sheet, even in a case in which the part cannot be recognized as an independent constituent member.

As the core wrapping sheet 42, a sheet member composed of hydrophilic paper or fiber is used. More specifically, a tissue made of bleached softwood kraft pulp can be used.

A fragrance ingredient (not illustrated) is applied to at least a part of a region of the top sheet 20 or the absorbent body 40 in the animal excretion disposal sheet 10. A range to which the fragrance ingredient is applied can be any of the above described regions. Applying the fragrance ingredient to a part of a region of the top sheet 20 is preferable due to being able to apply the fragrance by a relatively easy step. Applying the fragrance ingredient to a part of a region of the absorbent body 40 is preferable due to being able to make a scent be perceived sufficiently by a consumer and to suppress dissipation of the fragrance ingredient before use more effectively than in a case of applying the fragrance ingredient to the top sheet 20.

The type of the fragrance ingredient is not particularly limited. In the folded animal excretion disposal sheet 10, conventionally known fragrances can be used in applying the fragrance ingredient. It should be noted that since the folded animal excretion disposal sheet 10 is generally used indoors, the fragrances are required to be of a scent type and intensity that are agreeable for indoor users. For example, musk, cis-3-hexanol, phenylethyl alcohol, limonene, lactone, melonal, calone and the like can be preferably used as the fragrance.

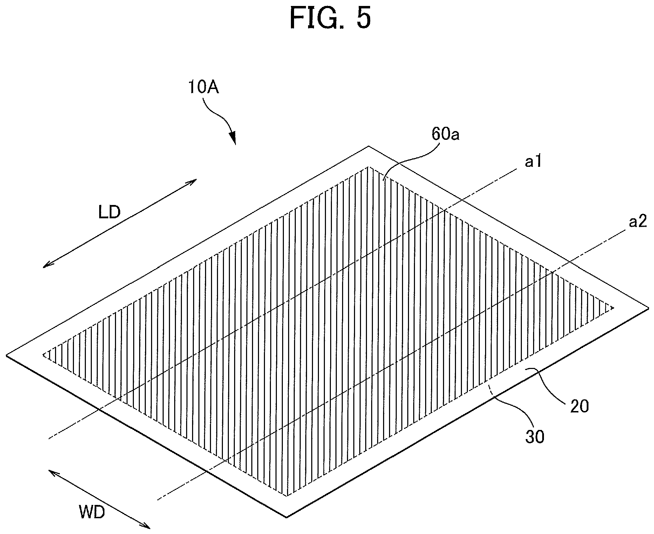

It should be noted that it is preferable that evocative information 60 (60a) that can evoke the scent of the fragrance ingredient is displayed on the top sheet 20 or on the absorbent body 40 of the animal excretion disposal sheet 10, as shown in FIG. 5. Here, the evocative information is visual information constituted of at least one of color, figure, and character. In addition, the evocative information indicates visual information that allows a consumer of the folded animal excretion disposal sheet 1 to recall an image derived from the scent of the folded animal excretion disposal sheet 1 from the appearance of the folded animal excretion disposal sheet 1, upon visually recognizing the information.

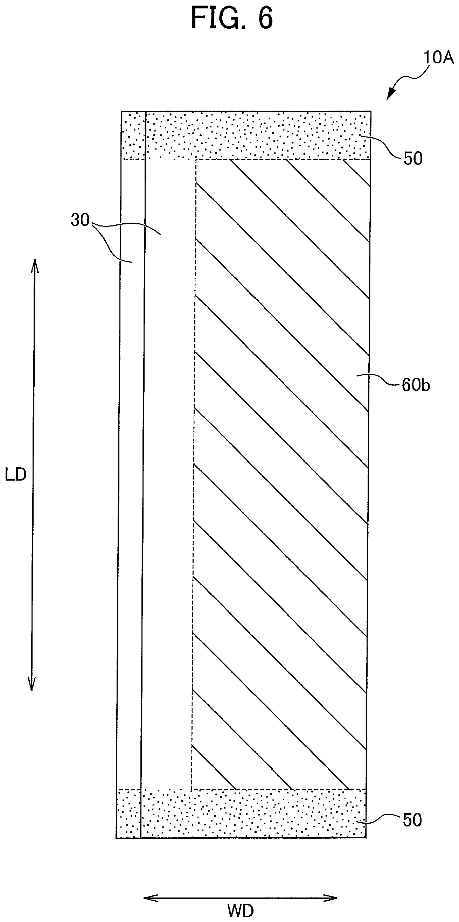

The evocative information 60 is preferably displayed on the folded animal excretion disposal sheet 1 so as to be visually recognizable also from a side of the back sheet 30. FIG. 6 is a diagram schematically illustrating the evocative information 60b displayed on the folded animal excretion disposal sheet 1 in a mode in which visual recognition is possible from the back sheet side. As described above, by configuring the folded animal excretion disposal sheet 1 such that the evocative information 60b is visually recognizable from the back sheet 30 side, the evocative information 60b can be visually recognized by a consumer even in a folded state, for example before start of use. As a result, the product image derived from the scent of the fragrance ingredient being applied can be evoked and the product image of the folded animal excretion disposal sheet 1 can be substantially improved.

For example, by composing the top face side core wrapping sheet 421 with a tissue dyed in a particular color which can evoke the scent of the fragrance ingredient, and by optimizing thickness, basis weight and color of the top sheet 20, the back sheet 30, and the absorbent body 40 respectively, the particular color (hereinafter also referred to as "evocative color") can be made easily visually recognizable either from the top sheet 20 side or from the back sheet 30 side of the animal excretion disposal sheet 10.

Here, representative specific examples of combinations of the fragrance which can be preferably used for the folded animal excretion disposal sheet and the evocative color which can evoke the scent of the fragrance are presented in the following Table 1. The combination of the fragrance and the evocative color can be any combination that allows the consumer to recall the scent of the fragrance upon visually recognizing the evocative color. The combination is not limited to the combinations presented in Table 1. However, by employing the combinations presented in Table 1 including fragrances which have been practically used as fragrances for folded animal excretion disposal sheets, the folded animal excretion disposal sheet 10 can be a folded animal excretion disposal sheet that allows the consumer to easily and reliably recall the product image derived from the scent from the appearance thereof.

**[Table 1]**

| Fragrance (Name of Compound) | Scent | Evocative Color |
|---|---|---|
| Musk | Soap-like Scent | White, Blue |
| Cis-3-hexanol | Green tea-like Scent | Green |
| Phenylethyl alcohol | Floral Scent | Pink, Yellow |
| Limonene | Citrus Scent | Yellow, Green |
| Lactone | Fruity Scent (Peach etc.) | Pink, Yellow |
| Melonal, Calone | Marine scent | Blue |

By folding the animal excretion disposal sheet 10 described above in a mode to be described below, and by further forming the temporary joining portion 50, the folded animal excretion disposal sheet 1 can be obtained. Hereinafter, the folded animal excretion disposal sheet 1 having the temporary joining portion 50 in a state of being folded is described in detail.

As shown in FIGS. 3 and 4, the folded animal excretion disposal sheet 1 has been folded in a mode in which the top sheet 20 of the animal excretion disposal sheet 10 is not exposed to the outer face. Also by employing such a mode, dissipation of the fragrance ingredient before starting to use the folded animal excretion disposal sheet 1 can be suppressed. In addition, by providing the temporary joining portion 50, the folded animal excretion disposal sheet 1 further improves an effect of preventing dissipation of the fragrance ingredient in an animal excretion disposal sheet in such a mode.

The animal excretion disposal sheet 10 is folded along the folding lines a1, a2 which are parallel to the first pair of lateral edges 11. As a result, the outer peripheral joining portion 13, which composes the second pair of lateral edges 12, is arranged at such a position that the outer peripheral joining portion 13 overlaps itself in a plan view. The temporary joining portion 50 is formed at a part where the plurality of outer peripheral joining portions 13 overlap.

A method of folding the folded animal excretion disposal sheet 1 can be any folding method as long as the method fulfills two requirements: the top sheet 20 is not exposed to the outer face in a folded state; and the folded animal excretion disposal sheet 1 is folded along folding lines which are parallel to the first pair of lateral edges 11, and the outer peripheral joining portion 13 which composes the second pair of lateral edges 12 is arranged at such a position that the outer peripheral joining portion 13 overlaps itself collinearly in a plan view. The folding method can use double folding, quadruple folding, or folding along folding lines more than four. However, triple folding along the folding lines a1, a2 shown in FIG. 1, in other words the two parallel folding lines a1, a2 which are at equal distances from the first pair of lateral edges 11, as shown in FIG. 3, is preferable. By employing this folding method of triple folding, the folding-back step can be performed by a relatively simple manufacturing device. In addition, by folding in such a way, an area where a part of the top sheet 20 and a part of the back sheet 30 overlap is necessarily provided in the outer peripheral joining portion 13, facilitating more appropriate formation of the temporary joining portion 50 as described later in detail.

As shown in FIGS. 3 and 4, in the folded animal excretion disposal sheet 1, a plurality of the outer peripheral joining portions 13, which compose the second pair of lateral edges 12, are temporarily joined to each other to thereby form a pair of temporary joining portions 50. The temporary joining portions 50 have been joined in such a joining state that the plurality of outer peripheral joining portions 13 can be easily detached by a user. The outer peripheral joining portions 13 are composed of the second pair of lateral edges 12 which are arranged at a position where the second pair of lateral edges 12 overlap in a plan view as a result of folding. Here, if the temporary joining portion 50 is not formed in a part where the outer peripheral joining portions 13 composing the second pair of lateral edges 12 overlaps, an opening or a gap is necessarily formed between the sides of the plurality of outer peripheral joining portions 13. The temporary joining portion 50 is formed in a mode of sealing the opening or the gap by joining the outer peripheral joining portions 13.

Here, temporary joining indicates a state of being joined to an extent that a joined portion can be easily detached manually only by fingertips or the like when the consumer uses the folded animal excretion disposal sheet 1, and of being temporarily joined with a joining strength such that a part of the top sheet 20 and a part of the back sheet 30 constituting the temporary joining portion are not damaged upon detachment thereof. As used herein, being damaged indicates a state in which: in the top sheet 20, a part of the nonwoven fabric is ruptured or a part of fibers protrudes from the nonwoven fabric; in the back sheet 30, damage such as making holes or split is caused in a part of the resin film; the top sheet 20 and the back sheet 30 constituting the outer peripheral joining portion 13 are separated; and the like.

The temporary joining portion 50 is a portion in which the above described temporary joining is provided between: parts of the top sheet 20; or a part of the top sheet 20 and a part of the back sheet 30, constituting the outer peripheral joining portion 13. In addition, the temporary joining portion 50 is a portion formed in a mode of sealing an opening or a gap, composed of the outer peripheral joining portions 13. The arrangement for causing the temporary joining is not necessarily identified unambiguously, and the temporary joining can be caused by various effects associated with pressure-bonding of the top sheet 20 with the back sheet 30 and the like.

For example, the temporary joining portion 50 can also be formed by only a minor amount of a hotmelt adhesive applied inside the outer peripheral joining portion 13 leaking to the interface of the plurality of outer peripheral joining portions 13 upon pressure bonding, to thereby temporarily join the plurality of outer peripheral joining portions 13. In this case, an adhesive of a rubber-based type can be preferably used as the hotmelt adhesive.

The joining strength of the temporary joining by the hotmelt adhesive can be any strength with which each of the faces can be temporarily joined. The strength is not uniform across the entire joined face. At h1, h2, and h3 in FIG. 4, joining strengths are required to be in the order of h1 > h2 > h3 as relative joining strengths. Especially at h1, the top sheet 20 and the back sheet 30 are preferably joined slightly more strongly than at other positions. By maintaining the temporary joining at least at h1, the temporary joining portion 50 can be prevented from completely detaching even under a predetermined external pressure. In addition, since h1 is in the outer peripheral joining portion 13 of the top sheet 20, even if a part of the top sheet 20 is broken at this position in a small area, the absorption performance will not be impaired and the product will not be severely damaged. h2 preferably has the second greatest joining strength after that of h1. h3 is only required to have a small strength for allowing easy detachment. Given the above, for example, by applying additional hotmelt adhesive only in the vicinity of h1, the relative differences in joining strength of respective parts of the temporary joining portion 50 can be adjusted as described above.

In addition, it is more preferable that, in a case in which the top sheet 20 is a nonwoven fabric and the back sheet 30 is a resin film, the temporary joining portion 50 is configured such that a part of the top sheet 20 and a part of the back sheet 30 are joined by a hotmelt adhesive. It has been proven that, in the folded animal excretion disposal sheet 1, the temporary joining portion 50 having a preferable strength fulfilling the above described requirements of temporary joining can be formed by a minor amount of the hotmelt adhesive leaking to the interface between the nonwoven fabric and the resin film and the like.

Alternatively, in a case in which the top sheet 20 is a nonwoven fabric and the back sheet 30 is a resin film, the temporary joining portion 50 can be formed in such a way that the surface of the resin film penetrates into fibers constituting the nonwoven fabric. Also by optimizing the pressure for pressure bonding according to the type and basis weight of the nonwoven fabric and the resin film, temporary joining with a desired joining strength can be provided between these members. In this case, the temporary joining portion 50 with a desired joining strength can be formed as appropriate, only by adjustment of the pressure for pressure bonding. Therefore, compared to conventional manufacture of pet sheets, the folded animal excretion disposal sheet 1 can be obtained without need for a special additional member or step.

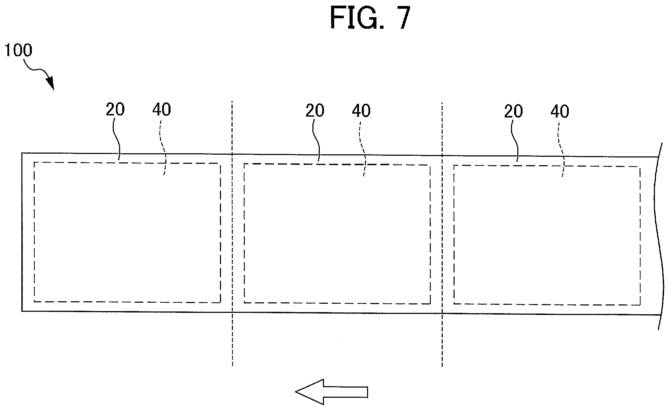

Next, an example of a method for manufacturing the folded animal excretion disposal sheet 10 is described with reference to FIGS. 7 to 9. In the manufacture of the folded animal excretion disposal sheet 10, first, an absorbent article continuous body 100, which is a material for the folded animal excretion disposal sheet, is formed by a continuous body forming step. As shown in FIG. 7, in the absorbent article continuous body 100, the absorbent body 40 is arranged at predetermined intervals on a continuous belt-like back sheet material, forming the back sheet 30. When arranging, first a hotmelt adhesive is applied. A preferable method for applying the hotmelt adhesive is a method of applying linearly along a flow direction of a manufacturing line of the absorbent article continuous body 100, by a contactless coating process such as bead coating. Thereafter, the absorbent body 40 is quickly placed on the back sheet material at the predetermined intervals, and the back sheet material and the absorbent body 40 are fixed to each other by adhesion. It should be noted that, as a material for the top face side core wrapping sheet 421 of the absorbent body, a colored tissue dyed in a color which can evoke the scent of the fragrance described below is used. Thereafter, a continuous belt-like top sheet material, which is made to be the top sheet 20, is placed to cover the absorbent body 40, and the back sheet material and the top sheet material are directly bonded to each other by a hotmelt adhesive in the outer peripheral joining portion 13 where the absorbent body is not present on the back sheet material, to thereby obtain the absorbent article continuous body 100.

Next, the fragrance is applied to a surface of the top sheet 20 of the absorbent article continuous body 100 formed through the abovementioned steps. Application of the fragrance can be performed by a well-known coater or the like. The range of application is not particularly limited; however, it is preferable to apply the fragrance only in a region where the top sheet 20 overlaps itself when folded in a later step. This can provide sufficient scent with a small amount of fragrance. This also can avoid negative effects due to the fragrance ingredient attaching to other parts.

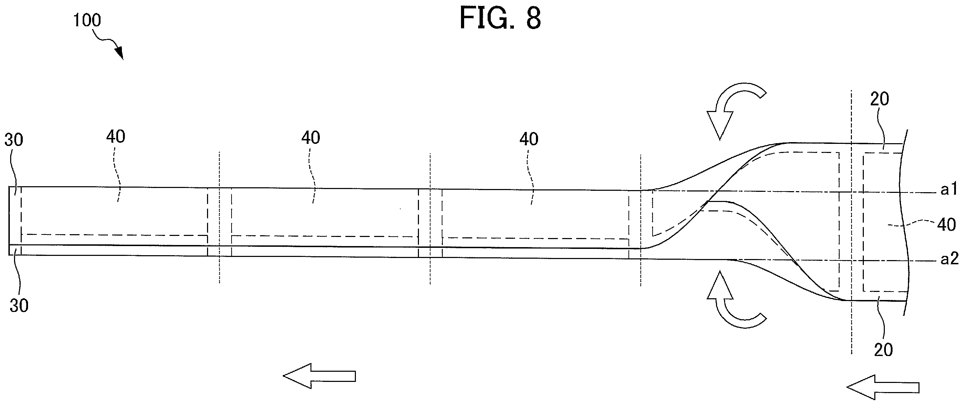

A folding-back step takes place after applying the fragrance. As shown in FIG. 8, the absorbent article continuous body 100 is folded back along the folding lines a1, a2. As a result, triple-fold can be made with the back sheet 30 directed outward as shown in FIGS. 3 and 4.

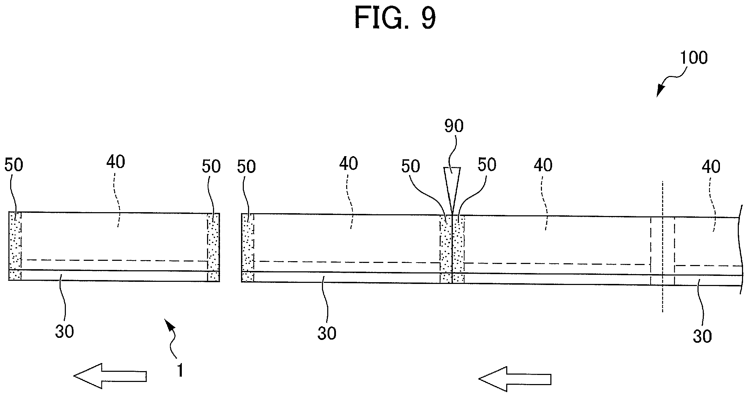

A cutting step takes place after folding back. As shown in FIG. 9, the absorbent article continuous body 100 is cut into a predetermined size by a cutting device 90 such as a cutter. The folded animal excretion disposal sheet 1 can thus be manufactured.

During the cutting step, by appropriately adjusting cutting conditions such as the shape of the cutting edge of the cutting device 90, cutting speed, pressure applied to a cutting place, and the like, the temporary joining portion 50 can be formed appropriately on the cutting plane.

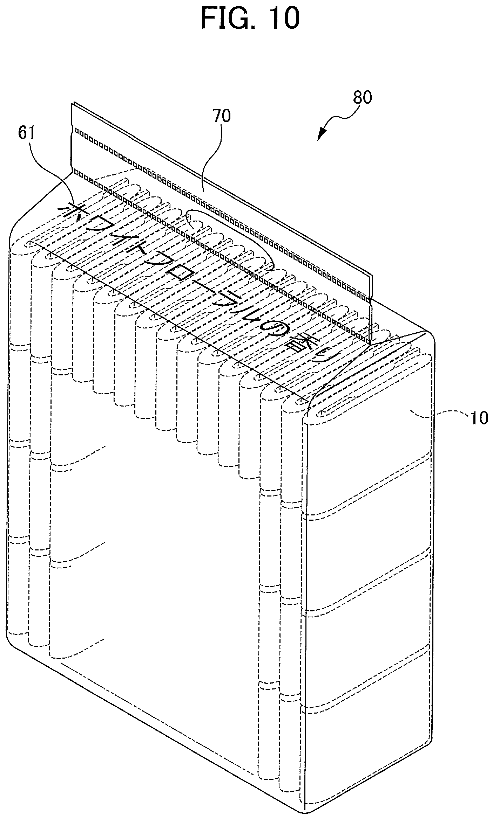

The above described folded animal excretion disposal sheet 1 provides the following effects.
(1) The folded animal excretion disposal sheet 1 formed by folding the animal excretion disposal sheet 10 having a rectangular shape in a plan view with the first pair of lateral edges 11 and the second pair of lateral edges 12, is configured such that: the animal excretion disposal sheet 10 has the outer peripheral joining portion 13 in which the liquid permeable top sheet 20 and the liquid impermeable back sheet 30 are joined and the central absorbent core portion 14 in which the absorbent core 40 is disposed between the top sheet 20 and the back sheet 30; the fragrance ingredient is applied to the top sheet 20 and/or the absorbent body 40; the folded animal excretion disposal sheet 1 has been folded along the folding line which is parallel to the first pair of lateral edges 11, such that the top sheet 20 is not exposed to an outer surface; and the plurality of outer peripheral joining portions 13 which compose the second pair of lateral edges 12 after folding are temporarily joined to each other to thereby form the pair of temporary joining portions 50. As a result, in the folded animal excretion disposal sheet 1, by suppressing dissipation of the fragrance ingredient before use by the consumer, the product image derived from the scent upon start of use can be improved.
(2) The outer peripheral joining portion 13 in the temporary joining portion 50 is configured such that the top sheet 20 and the back sheet 30 are joined by a hotmelt adhesive. As a result, the temporary joining portion 50 having an appropriate joining strength can be formed arbitrarily. An effect of improving the image of the folded animal excretion disposal sheet 1 can thus be provided more reliably.
(3) The temporary joining portion 50 is configured such that a part of an outermost edge among the first pair of lateral edges 11 and positioned on an outer face side, is temporarily joined with a joining strength greater than that of other parts. As a result, the joining strength of the temporary joining portion 50 can be optimized more finely. An effect of suppressing dissipation of the fragrance ingredient by the temporary joining portion 50 can thus be provided more reliably.
(4) The folded animal excretion disposal sheet 1 is configured to be folded in three along two folding lines at equal distances from the first pair of lateral edges 11. As a result, the folding-back step can be performed by a relatively simple manufacturing device. In addition, an area where a part of the top sheet 20 and a part of the back sheet 30 overlap is necessarily provided in the outer peripheral joining portion 13, facilitating appropriate formation of the temporary joining portion 50.
(5) The top sheet 20 is a nonwoven fabric and the back sheet 30 is a resin film, the temporary joining portion 50 is configured to be formed by a surface of the resin film penetrating into fibers constituting the nonwoven fabric. As a result, the temporary joining portion 50 having an appropriate joining strength can be formed as desired. An effect of improving the image of the folded animal excretion disposal sheet 1 can thus be provided more reliably.
(6) An outermost edge, which is among the first pair of lateral edges 11 and is positioned on the outer face side of the folded animal excretion disposal sheet 1, is shifted to a position which does not overlap, in a plan view, with a side edge of the folded animal excretion disposal sheet 1 on the outermost edge side. This allows the preferable sealing effect of the temporary joining portion 50 to be maintained while facilitating detachment and opening thereof by the consumer. The easy handling property of the folded animal excretion disposal sheet 1 can thus be further improved.
(7) A configuration is employed in which the fragrance ingredient is applied to an area on the top sheet 20 in which the top sheet 20 portions face each other. As a result, sufficient scent can be given to the folded animal excretion disposal sheet 1 with a relatively small amount of the fragrance ingredient, and the scent can be maintained until the start of use.
(11) A method for manufacturing any one of the above folded animal excretion disposal sheets 1 has been configured to include: a continuous body forming step of forming the absorbent article continuous body 100 in which a plurality of absorbent bodies are disposed at predetermined intervals in a longitudinal direction, between a belt-like top sheet and a belt-like back surface layer; a folding-back step of folding the pair of lateral edges of the absorbent article continuous body 100 along folding lines that are parallel to the longitudinal direction of the absorbent article continuous body 100; and a cutting step of cutting the absorbent article continuous body 100 after the folding-back step in a width direction at predetermined intervals in the longitudinal direction; in which the pair of temporary joining portions 50 is formed in the cutting step. As a result, the folded animal excretion disposal sheet 1 that provides a remarkable effect of improving an image can be manufactured with high productivity, without a substantial addition of step or the like.
   Next, a package body of the animal excretion disposal sheet is described. As shown in FIG. 10, a package body 80 is the folded animal excretion disposal sheet 1 packaged in a bag 70 made of a resin film. The folded animal excretion disposal sheet 1 is generally distributed in a state of such a package body.
   In the package body 80, the folded animal excretion disposal sheet 1 is disposed in the bag 70 in a state of being folded, as shown in FIG. 10. A method of folding the folded animal excretion disposal sheet 1 can be adjusted as appropriate according to the size of the folded animal excretion disposal sheet 1 and the size of the bag 70. As an example, in a case of a sheet of a general size of 440 mm x 320 mm, it is preferable to package the sheet in a state of being further triple-folded to be reduced in size to half-size to quarter-size, from a triple-folded state with the back sheet 30 constituting the outer face as described above. It is preferable to package the folded animal excretion disposal sheet 1 in the bag 70 tightly with no space there between, in an arrangement shown in FIG. 10, for example.
   As the bag 70, a resin film such as polyethylene, polypropylene, polyethylene terephthalate shaped into a bag form can be used. In addition, the bag 70 is preferably a non-hermetic container having a hole portion. This is because a hermetic container cannot release air entering the bag during packaging of the folded animal excretion disposal sheet 1 and would make it difficult to package the folded animal excretion disposal sheets in the bag 70 tightly with no space therebetween, as described above. The fragrance ingredient may obviously be dissipated through the hole portion. However, the package body 80 is obtained by forming the temporary joining portion 50 on the folded animal excretion disposal sheet 1 and, furthermore, arranging the folded animal excretion disposal sheets 1 tightly with no space therebetween as described above. As a result, even in a case in which the bag 70 is a non-hermetic container having the hole portion that may let through the fragrance ingredient, dissipation of the fragrance ingredient can be suppressed.
   It is preferable that fragrance ingredient information 61 which indicates the type of the fragrance ingredient applied to the folded animal excretion disposal sheets is provided on the bag 70. By clearly displaying the fragrance ingredient information 61 on the bag 70, a consumer can correctly understand the type of scent based on the fragrance ingredient information 61 and then perceive the scent of the fragrance upon opening of the bag 70.
   The above described package body 80 provides the following effects.
(8) The package body 80 is configured such that a plurality of folded animal excretion disposal sheets 1 are stacked and housed in the bag 70, wherein the folded animal excretion disposal sheets 1 are stored in a state of being pressed against each other inside the bag 70. This can sufficiently suppress dissipation of the fragrance ingredient before opening of the package.
(9) The bag is configured to be a non-hermetic container having the hole portion that may let through the fragrance ingredient. This can improve operability of a packaging operation to the bag in the above described mode. Even in this case, dissipation of the fragrance ingredient before opening of the package can be sufficiently suppressed.
(10) The bag 70 is configured such that the fragrance ingredient information 61 which indicates the type of the fragrance ingredient is provided thereon. This allows a consumer to correctly understand the type of scent based on the fragrance ingredient information 61 and then to perceive the scent of the fragrance sensorially upon opening of the bag 70. Through such processes, the effect of improving the image of the folded animal excretion disposal sheet 10 can thus be further amplified.

A scented pet sheet provided with the temporary joining portion (Example) and a pet sheet having the same configuration except for absence of the temporary joining portion (Comparative Example) were prepared, packaged in the same pressed state in polyethylene bag bodies, stored in a high temperature chamber of 50C for 4 days, and a sensory test was carried out with regard to respective pet sheets taken out from the bag bodies after 4 days. For the scented pet sheet provided with the temporary joining portion, 5 out of 5 people responded that they "scent strongly perceived". For the pet sheet without the temporary joining portion, 5 out of 5 people responded "scent perceived". It has thus been confirmed that the pet sheet provided with the constituent requirements of the present invention obviously has a stronger scent.

The embodiments of the present invention have been explained above; however, the present invention is not limited thereto. It should also be noted that the effects described in the embodiment of the present invention are merely preferred effects of the present invention and the effects of the present invention are not limited thereto.

The folded animal excretion disposal sheet 1 of the present invention can be used as a toilet for an animal kept as a pet such as a dog, cat, rabbit or the like, and can be particularly preferably used as a toilet for a dog kept indoors.

## Claims

1. A folded animal excretion disposal sheet (1) formed by folding an animal excretion disposal sheet (10) having a rectangular shape in a plan view with a first pair of lateral edges (11) and a second pair of lateral edges (12),
wherein the animal excretion disposal sheet (10) comprises an outer peripheral joining portion (13) in which a liquid permeable top sheet (20) and a liquid impermeable back sheet (30) are joined and a central absorbent body portion (14) in which an absorbent body (40) is disposed between the top sheet (20) and the back sheet (30);
a fragrance ingredient is applied to the top sheet (20) and/or the absorbent body (40);
the folded animal excretion disposal sheet (10) is folded along a folding line parallel to the first pair of lateral edges (11), such that the top sheet (20) is not exposed to an outer surface, and **characterized in that** a plurality of the outer peripheral joining portions (13), composing the second pair of lateral edges (12) after folding, are temporarily joined to each other to thereby form a pair of temporary joining portions (50) joined in such a joining state that the plurality of outer peripheral joining portions are easily detached by a user, wherein
in the outer peripheral joining portion (13) in the temporary joining portion (50), the top sheet (20) and the back sheet (30) are joined by a hotmelt adhesive,
in the temporary joining portion (50), joining strength is not uniform across an entire joined face, and a part of an outermost edge among the first pair of lateral edges and positioned on an outer face side, is temporarily joined with a joining strength greater than that of other parts.

2. The folded animal excretion disposal sheet according to claim 1, wherein the folded animal excretion disposal sheet (10) is folded in three along two folding lines at equal distances from the first pair of lateral edges (11).

3. The folded animal excretion disposal sheet according to claim 1 or 2, wherein
the top sheet (20) is a nonwoven fabric and the back sheet (30) is a resin film; and
the temporary joining portion (50) is formed by a surface of the resin film penetrating into fibers composing the nonwoven fabric.

4. The folded animal excretion disposal sheet according to any one of claims 1 to 3, wherein
an outermost edge among the first pair of lateral edges (11) and positioned on the outer face side, is shifted to a position which does not overlap, in a plan view with a side edge of the folded animal excretion disposal sheet on the outermost edge side.

5. The folded animal excretion disposal sheet according to any one of claims 1 to 4, wherein
the fragrance ingredient is applied to an area on the top sheet (20) in which the top sheet (20) portions face each other.

6. A package body (80) in which a plurality of folded animal excretion disposal sheets (1) according to any one of claims 1 to 5 are stacked and contained in a bag (70), wherein
the folded animal excretion disposal sheets (1) are contained in a state of being pressed against each other inside the bag (70).

7. The package body according to claim 6, wherein
the bag (70) is a non-hermetic container having a hole portion that can let through the fragrance ingredient.

8. The package body according to claim 7, wherein fragrance ingredient information (61) is noted on the bag (70).

9. A method for manufacturing the folded animal excretion disposal sheet according to any one of claims 1 to 5, comprising:
a continuous body forming step of forming an absorbent article continuous body (100) in which a plurality of absorbent bodies (40) are disposed at predetermined intervals in a longitudinal direction, between a belt-like top sheet and a belt-like back surface layer;
a folding-back step of folding the pair of lateral edges (11) of the absorbent article continuous body (100) along folding lines that are parallel to the longitudinal direction of the absorbent article continuous body (100); and
a cutting step of cutting the absorbent article continuous body (100) after the folding-back step in a width direction at predetermined intervals in the longitudinal direction; wherein
the pair of temporary joining portions (50) is formed in the cutting step.

## Patentansprüche

1. Gefaltete Tierausscheidungsentsorgungslage (1), die durch Falten einer Tierausscheidungsentsorgungslage (10) mit einer aus einer Draufsicht rechteckigen Form mit einem ersten Paar von Seitenkanten (11) und einem zweiten Paar von Seitenkanten (12) gebildet wird,
wobei die Tierausscheidungsentsorgungslage (10) einen äußeren Umfangsverbindungsabschnitt (13) umfasst, in dem eine flüssigkeitsdurchlässige Oberlage (20) und eine flüssigkeitsundurchlässige Unterlage (30) verbunden sind und ein zentraler Absorptionskörperabschnitt (14), in dem ein Absorptionskörper (40) zwischen der Oberlage (20) und der Unterlage (30) angeordnet ist;
ein Duftstoffbestandteil auf die Oberlage (20) und/oder den Absorptionskörper (40) aufgebracht ist;
die Tierausscheidungsentsorgungslage (10) entlang einer Faltelinie parallel zu dem ersten Paar von Seitenkanten (11) gefaltet ist, sodass die Oberlage (20) nicht zu einer äußeren Oberfläche freiliegt, und **dadurch gekennzeichnet, dass**
eine Vielzahl von äußeren Umfangsverbindungsabschnitten (13), die das zweite Paar von Seitenkanten (12) bilden, nach dem Falten temporär miteinander verbunden sind, um dadurch ein Paar von temporären Verbindungsabschnitten (50) zu bilden, die in einem solchen Verbindungszustand verbunden sind, dass die Vielzahl von äußeren Umfangsverbindungsabschnitten einfach von einem Benutzer gelöst sind, wobei
in dem äußeren Umfangsverbindungsabschnitten (13) in dem temporären Verbindungsabschnitt (50) die Oberlage (20) und die Unterlage (30) durch einen Heißschmelzkleber verbunden sind,
in dem temporären Verbindungsabschnitt (50) die Verbindungsstärke über eine gesamte verbundene Fläche nicht gleich ist und ein Teil einer äußeresten Kante unter dem ersten Paar von Seitenkanten, die auf einer nach außenweisenden Seite positioniert ist, temporär mit einer Verbindungsstärke verbunden ist, die größer ist als die von anderen Teilen.

2. Gefaltete Tierausscheidungsentsorgungslage nach Anspruch 1, wobei
die gefaltete Tierausscheidungsentsorgungslage (10) entlang zweier Faltelinien in gleichen Abständen von dem ersten Paar von gefalteten Kanten (11) in Drei gefaltet ist.

3. Gefaltete Tierausscheidungsentsorgungslage nach Anspruch 1 oder 2, wobei
die Oberlage (20) ein Vliesstoff ist und die Hinterlage (30) ein Harzfilm ist; und
der temporäre Verbindungsabschnitt (50) durch eine Oberfläche des Harzfilms gebildet wird, der in die Fasern, die den Vliesstoff bilden, eindringt.

4. Gefaltete Tierausscheidungsentsorgungslage nach einem der Ansprüche 1 bis 3, wobei
eine äußerste Kante unter dem ersten Paar von Seitenkanten (11), die auf einer nach außenweisenden Seite positioniert ist, in eine Position verschoben ist, die in einer Draufsicht nicht mit einer Seitenkante der gefalteten Tierausscheidungsentsorgungslage auf der äußersten Kantenseite überlappt.

5. Gefaltete Tierausscheidungsentsorgungslage nach einem der Ansprüche 1 bis 4, wobei
der Duftstoffbestandteil in einem Bereich auf der Oberlage (20) aufgetragen ist, in dem die Abschnitte der Oberlage (20) einander zugewandt sind.

6. Verpackungskörper (80), in dem eine Vielzahl von gefalteten Tierausscheidungsentsorgungslagen (1) nach einem der Ansprüche 1 bis 5 gestapelt und in einem Beutel (70) enthalten sind, wobei
die gefalteten Tierausscheidungsentsorgungslagen (1) in einem Zustand enthalten sind, in dem sie in dem Beutel (70) gegeneinander gepresst sind.

7. Verpackungskörper nach Anspruch 6, wobei
der Beutel (70) ein nicht-hermetischer Behälter mit einem Lochabschnitt ist, der den Duftstoffbestandteil durchlassen kann.

8. Verpackungskörper nach Anspruch 7, wobei Duftstoffbestandteilinformationen (61) auf dem Beutel (70) angegeben sind.

9. Verfahren zur Herstellung der gefalteten Tierausscheidungsentsorgungslage nach einem der Ansprüche 1 bis 5, umfassend:
einen Kontinuierlichen-Körper-Bildungsschritt, bei dem ein kontinuierlicher Absorptionsartikelkörper (100) gebildet wird, in dem eine Vielzahl von Absorptionsltörpern (40) in vorbestimmten Intervallen in einer Längsrichtung zwischen einer gürtelförmigen Oberlage und einer gürtelförmigen Unteroberflächenlage angeordnet sind;
einen Zurückfalteschritt, bei dem das Paar von Seitenkanten (11) des kontinuierlichen Absorptionsartikelkörpers (100) entlang von Faltelinien, die zu der Längsrichtung des kontinuierlichen Absorptionsartikelkörpers (100) parallel sind, gefaltet werden; und
ein Schneidschritt, bei dem der kontinuierliche Absorptionsartikelkörper (100) nach dem Zurückfalteschritt in vorbestimmten Intervallen in die Längsrichtung in eine Breitenrichtung geschnitten werden; wobei
das Paar von temporären Verbindungsabschnitten (50) in dem Schneidschritt gebildet wird.

## Revendications

1. Feuille à excréments d'animaux pliée (1) formée en pliant une feuille à excréments d'animaux (10) ayant une forme rectangulaire sur une vue en plan avec une première paire de bords latéraux (11) et une seconde paire de bords latéraux (12),
dans laquelle la feuille à excréments d'animaux (10) comprend une partie de jonction périphérique extérieure (13) dans laquelle une feuille supérieure perméable aux liquides (20) et une feuille de support imperméable aux liquides (30) sont jointes et une partie corps absorbant central (14) dans laquelle un corps absorbant (40) est disposé entre la feuille supérieure (20) et la feuille de support (30) ;
un ingrédient parfumé est appliqué à la feuille supérieure (20) et/ou au corps absorbant (40) ;
la feuille à excréments d'animaux (10) est pliée le long d'une ligne de pliage parallèle à la première paire de bords latéraux (11), de telle sorte que la feuille supérieure (20) n'est pas exposée à une surface extérieure, et **caractérisée en ce que**
une pluralité des parties de jonction périphériques extérieures (13), composant la seconde paire de bords latéraux (12) après pliage, sont temporairement jointes les unes aux autres pour former ainsi une paire de parties de jonction temporaire (50) jointes dans un état de jonction tel que la pluralité de parties de jonction périphériques extérieures sont facilement détachées par un utilisateur, dans laquelle dans la partie de jonction périphérique extérieure (13) dans la partie de jonction temporaire (50), la feuille supérieure (20) et la feuille de support (30) sont jointes par un adhésif thermofusible,
dans la partie de jonction temporaire (50), la force de jonction n'est pas uniforme sur une face jointe entière, et une partie d'un bord le plus extérieur parmi la première paire de bords latéraux et positionnée sur un côté face extérieure, est temporairement jointe avec un force de jonction plus importante que celle d'autres parties,

2. Feuille à excréments d'animaux pliée selon la revendication 1, dans laquelle
la feuille à excréments d'animaux pliée (10) est pliée en trois le long de deux lignes de pliage à distances égales de la première paire de bords latéraux (11).

3. Feuille à excréments d'animaux pliée selon la revendication 1 ou 2, dans laquelle
la feuille supérieure (20) est un tissu non tissé et la feuille de support (30) est un film de résine ; et
la partie de jonction temporaire (50) est formée par une surface du film de résine pénétrant dans des fibres composant le tissu non tissé.

4. Feuille à excréments d'animaux pliée selon l'une quelconque des revendications 1 à 3, dans laquelle
un bord le plus extérieur parmi la première paire de bords latéraux (11) et positionné sur le côté face extérieure est décalé vers une position qui ne chevauche pas, sur une vue en plan, un bord latéral de la feuille à excréments d'animaux pliée sur le côté bord le plus extérieur.

5. Feuille à excréments d'animaux pliée selon l'une quelconque des revendications 1 à 4, dans laquelle
l'ingrédient parfumé est appliqué à une zone sur la feuille supérieure (20) dans laquelle les parties de feuille supérieure (20) se font mutuellement face.

6. Corps d'emballage (80) dans lequel une pluralité de feuilles à excréments d'animaux pliée (1) selon l'une quelconque des revendications 1 à 5 sont empilées et contenues dans un sac (70), dans lequel
les feuilles à excréments d'animaux pliée (1) sont contenues dans un état où elles sont pressées les unes contre les autres à l'intérieur du sac (70).

7. Corps d'emballage selon la revendication 6, dans lequel le sac (70) est un contenant non hermétique ayant une partie trou qui peut laisser passer l'ingrédient parfumé.

8. Corps d'emballage selon la revendication 7, dans lequel des informations (61) de l'ingrédient parfumé sont notées sur le sac (70).

9. Procédé de fabrication de la feuille à excréments d'animaux pliée selon l'une quelconque des revendications 1 à 5, comprenant ;
une étape de formation de corps continu consistant à former un corps continu (100) d'article absorbant dans lequel une pluralité de corps absorbants (40) sont disposés à intervalles prédéterminés dans une direction longitudinale, entre la feuille supérieure de type ceinture et une couche de surface de support de type ceinture ;
une étape de pliage consistant à plier la paire de bords latéraux (11) du corps continu (100) d'article absorbant le long de lignes de pliage qui sont parallèles à la direction longitudinale du corps continu (100) d'article absorbant ; et
une étape de découpe consistant à découper le corps continu (100) d'article absorbant après l'étape de pliage dans une direction de largeur à intervalles prédéterminés dans la direction longitudinale ; dans lequel
la paire de parties de jonction temporaire (50) est formée lors de l'étape de découpe.
